# EUROPEAN PATENT SPECIFICATION

(11) **EP 1 788 035 B1**
(45) Date of publication and mention of the grant of the patent: **19.01.2011**
(21) Application number: 05770514.7
(22) Date of filing: 09.08.2005
(51) Int. Cl.: C08L 101/10, C08K 5/55, C09J 11/04, C09J 201/10, C08K 3/38, C09D 101/06, C09J 123/00, C09J 133/00, C09J 175/04

(54) **REACTIVE HOT-MELT RESIN COMPOSITION AND REACTIVE HOT-MELT ADHESIVE**
REAKTIVE SCHMELZE-HARZ-ZUSAMMENSETZUNG UND REAKTIVER SCHMELZHAFTKLEBER
COMPOSITION DE RÉSINE RÉACTIVE THERMOFUSIBLE ET ADHÉSIF RÉACTIF THERMOFUSIBLE

(30) Priority: 11.08.2004 JP 2004234755
(43) Date of publication of application: 23.05.2007
(73) Proprietor: KONISHI CO., LTD., Osaka-shi, Osaka 541-0045 (JP)
(72) Inventor: SATO, Shinichi c/o Konishi Co., Ltd., Saitama 338-0832 (JP); HIRATA, Tadayoshi c/o Konishi Co., Ltd., Saitama 338-0832 (JP); IGARASHI, Hiroyoshi c/o Konishi Co., Ltd., Saitama 338-0832 (JP)
(74) Representative: Grünecker, Kinkeldey, Stockmair & Schwanhäusser Anwaltssozietät
(86) International application number: PCT/JP2005/014550
(87) International publication number: WO 2006/016568

(56) References cited:
- JP-A- 2003 055 555
- JP-A- 2003 113 240
- JP-A- 2004 075 847
- JP-A- 2004 292 622

## Description

### TECHNICAL FIELD

The present invention relates to a reactive hot-melt resin composition and a reactive hot-melt adhesive using the same, and in particular, to a reactive hot-melt adhesive prepared by using a curable resin having a silicon-containing functional group that is coated and bonded to a material as it is melted by heat and hardens rapidly at room temperature.

### BACKGROUND ART

There are many curable resins that are used for adhesion and bonding; the hardening pattern differs significantly according to the molecule configuration of the resin used; and thus, a resin having a hardening pattern suitable is selected properly according to applications, for example, from thermosetting resins, resins reacting and hardening in contact with catalyst, atmospheric moisture or the like, and other resins.

Hot-melt adhesives bond the substrates by melting by heat of a thermoplastic resin of solid at room temperature, application on the adhesion surface, and cooling solidification of the resin on the adhesion surface. In contrast, reactive hot-melt adhesives adhere to the substrates by cooling solidification similar to that of the hot-melt adhesives (primary adhesion) and additionally hardening with proceeding in reactions such as crosslinking caused by a curing catalyst present in the resin forming the adhesive layer, enhancing the adhesiveness to the substrate and improving the heat resistance of the adhesive layer simultaneously (secondary adhesion). Accordingly in reactive hot-melt adhesives, the curing catalyst should function in the cold state (typically, at neat the normal temperature) without supplied heat, for preventing hardening reaction of the resin in the melting-coating-adhesion phase (primary adhesion phase) and yet accelerating hardening of the resin coated on the substrate in the secondary adhesion phase.

Most conventional reactive hot-melt adhesives employ a resin containing terminal isocyanate groups as the curable resin, but there is no rapid-hardening adhesive that shows a strength rapidly increasing in several minutes.

There are some reactive hot-melt adhesives commercially available, although they are not general-purpose products, that are prepared with a resin having a silicon-containing functional group such as hydrolytic silyl group, taking advantages of the favorable properties, for example in heat resistance, weather resistance, electric insulation, etc. of the silicon-containing functional group-containing resin. The reactive hot-melt adhesive of this type employs an organic tin compound such as dibutyltin dilaurate or dibutyltin diacetate as the curing catalyst, and, for example, the following Patent Document 1 discloses a curable resin of silylated urethane resin containing an organic tin compound as the curing catalyst. However, such reactive hot-melt adhesives as employing the resin having a silicon-containing functional group are also extremely less reactive and demand a hardening period of one day or longer.

In addition to the organic tin compounds, known curing catalysts for the resin having a silicon-containing functional group include organic acids and amine compounds. However, reactive hot-melt adhesives containing such a curing catalyst are still unsatisfactory from the point of hardening velocity, and thus not used widely.

On the other hand, in the field of paint, a moisture-hardening powder paint prepared with a resin containing a hydrolytic silyl group has been proposed in the following Patent Document 2. This paint is used in such a manner that a coated layer of the paint is formed by melting and smoothening a powder paint coated on a substrate under heat and hardening it by moisture in air simultaneously, and the thermal latent catalysts for use therein include compounds of a protonic or Lewis acid neutralized with a Lewis base, sulfonate esters, phosphate esters, amine imide compounds and onium compounds. The literature describes that the period for the melt-smoothened paint to be hardened was approximately one week at normal temperature and humidity.
Patent Document 1: Japanese Laid-Open Patent Application of Laid-Open No. 2003-055555
Patent Document 2: Japanese Laid-Open Patent Application of Laid-Open No. 11-1635

### SUMMARY OF THE INVENTION

### Problems to be solved by the Invention

Reactive hot-melt adhesives employing a resin having silicon-containing functional groups are very favorable as a sealing material and an adhesive for structural materials, because they are superior in properties such as heat resistance, weather resistance and electrical insulating properties. However, as described above, they demand a longer hardening period, leading to elongation of operation and deterioration in productivity, and thus, there is a need for fast-hardening reactive hot-melt adhesive employing a resin having a silicon-containing functional group.

Although it may be considered to increase the content of the curing catalyst organic tin compound for acceleration of hardening of a conventional reactive hot-melt adhesive employing a curable resin having silicon-containing functional groups, addition of the organic tin compound in a greater amount causes a problem of increase in hazard and toxicity associated with increase in the content of the heavy metal organic tin compound and also increase of environmental load when it is discarded. In addition when it is used for adhesion of a plastic resin having a hydrolytic group in the molecule such as polyurethane and polyester, presence of a great amount of the organic tin compound may accelerate decomposition of the plastic resin.

As described above, organic acids and amine compounds, which are less active as providing a fast-curing adhesive when used as curing catalyst for curable resin having the silicon-containing functional group, are used primarily as promoter.

An object of the present invention is to provide a fast-curing reactive hot-melt resin composition employing a resin having a silicon-containing functional group.

Another object of the present invention is to provide a fast-curing reactive hot-melt adhesive, a reactive hot-melt sealing material, a reactive hot melt coating material or the like using the reactive hot-melt resin composition.

### Means to Solve the Problems

In order to solve the problems above, according to an aspect of the present invention, a reactive hot-melt resin composition comprises a curable resin having a hydrolysable silyl group in the molecule and at least one boron compound selected from the group consisting of boron halides and boron halide complexes.

According to another aspect of the present invention, a reactive hot-melt adhesive comprises the reactive hot-melt resin composition.

### Effect of the Invention

The present invention provides a fast-curing reactive hot-melt resin composition containing a resin having a silicon-containing functional group, with a boron halide or the complex thereof blended as a curing catalyst. The adhesive, sealing material, coating material and the like using the same exhibit the properties of the resin having a silicon-containing functional group and harden and stabilize rapidly at around normal temperature after heat melting, resulting in improved working efficiency. They are thus very useful industrially.
The problem of the present invention is solved on the basis of claim 1 to claims 13.

### BEST MODE OF CARRYING OUT THE INVENTION

The reactive hot-melt resin composition according to the present invention contains a curable resin (A) having a silicon-containing functional group in the molecule and a curing catalyst (B), wherein a boron compound selected from the group consisting of boron halides and boron halide complexes is used for the curing catalyst (B). The silicon-containing functional group in the curable resin is a hydrolysable silyl group or a silanol group, and the curing catalyst functions as a catalyst for hydrolysis of the silyl group and dehydrating/crosslinking reaction of the silanol group. Use of the boron compound as curing catalyst makes the resin after application harden extremely 5 rapidly and stabilizes the resin extremely early in the primary phase of adhesion, allowing the bonding state maintained favorably and thus improving the handling efficiency, for example in fabrication and bonding, drastically.

The phenomenon that a curable resin (A) hardens significantly faster when the boron compound is used as the curing catalyst (B) is a finding obtained by screening studies on various compounds, and, although the reason is not clear, an essence is considered to reside in that the curing catalyst (B) be possibly present locally in the area close to the silicon-containing functional group in the curable resin composition. An organic metal compound such as organic tin compound, which is higher in organic character because of its organic group, is present relatively uniformly in the resin composition because of its affinity to the polymer main chain, but the boron compound above, which is higher in inorganicity than the organic metal compounds, seem to be more compatible with a silicon atom being relatively higher in inorganicity in the resin composition and is likely to gather around the silicon-containing functional group, consequently acting on the silicon-containing functional group more efficiently than the organic metal compound above. It is also suggested by the fact that the minimum amount of the catalyst needed for catalytic action is smaller when the boron compound is used than that when the organic tin compound is used.

Hereinafter, components for the reactive hot-melt resin composition according to the present invention will be described in detail.

The silicon-containing functional group contained in the curable resin (A) according to the invention is a hydrolysable silyl group, specifically, a bifunctional or hydrolysable silyl group, specifically, a bifunctional or trifunctional silicon-containing functional group represented by General Formula: -SiR¹X¹X² or General Formula: -SixX¹X²X³ (wherein, X¹, X² and X³ each independently represents a hydrolysable group and may be the same as or different from each other; and R¹ represents a substituted or unsubstituted organic group having 1 to 6 carbon atoms). Typical examples of the hydrolysable groups include halogen, hydride, alkoxyl, acyloxy, ketoximate, amino, amido, aminooxy, mercapto, and alkenyloxy groups. Among them, a silicon-containing functional group having an alkoxyl group as the hydrolysable group is preferable from the points of high reactivity and low odor. A trifunctional silicon-containing functional group is higher in reactivity to the curing catalyst (B) than a bifunctional silicon-containing functional group, and thus, use of a resin containing a trifunctional silicon-containing functional group results in higher hardening velocity. Because the bifunctional silicon-containing functional group, when present with a trifunctional silicon-containing functional group, has a reactivity greater than that when the bifunctional silicon-containing functional group is present alone, a curable resin (A) having a bifunctional group as a part of the silicon-containing functional group and a trifunctional group as the other part in the molecule is also a favorable embodiment, and a resin having a bifunctional silicon-containing group and a resin having a trifunctional silicon-containing functional group may be used as mixed.

Because the hardening speed by the curing catalyst (B) tends to increas when the curable resin (A) having a silicon-containing functional group also has a polar component such as urethane bond, urea bond, substituted urea bond, secondary or tertiary amino group or the like in the molecule, curable resins having at least one polar component selected from the bonds and groups above are preferable. Although the reason for the effectiveness of the polar component in increasing hardening velocity is not clear, it seems that the reactivity of the silicon-containing functional group is enhanced relatedly, for example, by electronic coordination with the bond or group, in particular with a nitrogen or oxygen atom having an isolated electron pair. Particularly effective among the polar components above are substituted urea bonds. The acceleration of hardening by incorporation of a polar component is greater when the silicon-containing functional group is trifunctional than when it is bifunctional.

The curable resins (A) having no polar component are possibly classified according to their main chain skeletons into groups of oxyalkylene polymer, saturated hydrocarbon polymer, vinyl polymer and the like, and it is possible to select the resin properly from the polymers above.

Examples of the curable resins (A) having an oxyalkylene polymer as the main chain skeleton include the resins described in Japanese Patent Publication Nos. 45-36319, 46-12154 and 49-32673, Japanese Patent Applications of Laid-Open Nos. 50-156599, 51-73561, 54-6096, 55-82123, 55-123620, 55-125121, 55-131022, 55-135135 and 55-137129, and others (resins generally called modified silicones).

Well known methods of producing the oxyalkylene polymer-type curable resin (A) include a method of allowing the alkenyl group of alkenyl group-containing polyoxyalkylene to react with a hydrogenated silicone compound having the silicon-containing functional group in the molecule in addition reaction and a method of radically adding a mercapto group to an alkenyl group by allowing an alkenyl group-containing polyoxyalkylene to react with a mercaptosilane compound having a mercapto group and the silicon-containing functional group in the molecule in addition reaction.

Alternatively, the oxyalkylene polymer-type curable resin (A) may be selected from commercially available oxyalkylene polymers, and example of the resin products for use include products manufactured by Kaneka Corporation (trade name: S203, S303, S810, SAT010, SAT030, SAT070, SAT200, SAT350, SAT400, MA903, MA904, MAX923, S911, S943, EST200, EST250, ESX280, SAX720, SAX725, SAX770, MA430, MA440, MA440A, MA447, and MAX610), products manufactured by Asahi Glass (trade name: ES-S2410, ES-S2420, ES-S3430, ES-S3630 and ES-GX3440ST), and the like.

Examples of the curable resins (A) having a saturated hydrocarbon polymer as the main chain skeleton include the reactive silyl group-containing saturated hydrocarbon polymers described in Japanese Patent Publication Nos. 4-69659 and 7-108928, Japanese Patent No. 2512468, Japanese Patent Application of Laid-Open No. 64-22904, Japanese Patent No. 2539445 and others. The saturated hydrocarbon polymer-type curable resin (A) may be selected properly from commercially available saturated hydrocarbon polymers, and examples thereof include products manufactured by Kaneka Corporation (trade name: Epion series products), products manufactured by Degussa Japan (trade name: VESTOPLAST 206, VESTOPLAST EP204, VESTOPLAST EP2303, VESTOPLAST EP2403, VESTOPLAST EP2606, VESTOPLAST EP2412, and VESTOPLAST EP2315), products manufactured by Clariant Japan (trade name: PP SI 1362) and the like.

Examples of the curable resins (A) having a vinyl polymer as the main chain skeleton include the reactive silyl group-containing vinyl polymers described in Japanese Patent Applications of Laid-Open Nos. 9-272715, 9-272714, 11-080249, 11-080250, 11-005815, 11-116617, 11-116606, 11-080571, 11-080570, 11-130931, 11-100433, 11-116763, 2003-82192, 2003-119339, 2003-171416, 2003-246861, 2003-327852, 2003-327620, 2004-002835 and others.

The curable resin (A) having the polar group in the molecule can be prepared by a known method, and the polar component above may be introduced as a connecting group produced during chemical reaction of multiple raw materials, or the curable resin may be prepared in reaction of a compound having the polar component previously produced. Alternatively, a curable resin (A) having multiple kinds of polar components may be prepared by using both of the methods above. The silicon-containing functional group can also be introduced by a known method, and examples thereof include a method of adding a hydrosilane compound or radically adding a mercaptosilane compound to a terminal alkenylated polymer, a method of introducing a silicon-containing functional group at the same time of polymerization with use of a copolymerizable monomer having a silicon-containing functional group, a method of preparing an alkenyl group-containing vinyl polymer and introducing a silicon-containing functional group by hydrosilylating the polymer, a method of introducing a silicon-containing functional group into a urethane prepolymer by using an aminosilane compound, and the like.

Among the curable resins above (A) having a polar component, curable resins having a polyoxyalkylene polymer as the main chain and also a substituted urea bond (-NR²-CO-NH-, wherein R² represents an organic group) (hereinafter, referred to as silylated urethane resins) give a cured product superior in adhesiveness, adhesive strength and elongation, i.e., they are favorable reactive hot-melt adhesives. The organic group R² is preferably one of the groups represented by the following Formulae (1) to (4), a phenyl group, and substituted or unsubstituted organic groups having 1 to 20 carbon atoms.

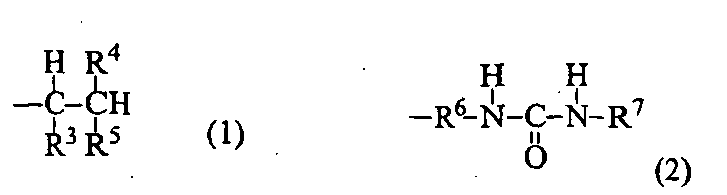

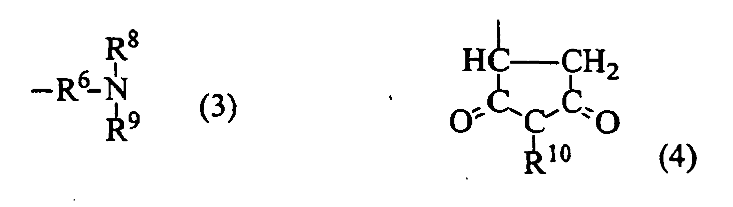

(in Formulae (1) to (4), R³ represents a hydrogen atom or -COOR¹⁰; R⁴ represents a hydrogen atom or a methyl group; R⁵ represents -COOR¹¹ or a nitrile group; R⁶ represents a substituted or unsubstituted bivalent organic group having 1 to 20 carbon atoms; R⁷ represents an organic group having a molecular weight of 500 or less that may contain a silicon atom; each of R⁸ and R⁹ represents an organic group represented by Formula (1) or Formula: -CO-NH-R⁷ (wherein, R⁷ is the same as that defined above); R¹⁰ represents a phenyl group, a cyclohexyl group or a substituted or unsubstituted monovalent organic group having 1 to 20 carbon atoms; and each of R¹¹ and R¹² represents an organic group having a molecular weight of 500 or less).
The silylated urethane resin can be prepared by allowing a compound a having a polyoxyalkylene polymer as the main chain and one or more of a hydroxyl group and primary and secondary amino groups in the molecule to react with a polyisocyanate compound b, giving a urethane prepolymer, and then, allowing the urethane prepolymer to react with a compound represented by Formula: HR²N-Y-SiR¹X¹X² or HR²N-Y-SiX¹X²X³ (wherein, R¹, R², X¹, X² and X³ are respectively the same as those defined above; and Y represents a substituted or unsubstituted bivalent organic group having 1 to 20 carbon atoms or a group represented by the following Formula (5) or (6)). Refer to Japanese Patent No. 3313360 for details about the preparation methods.

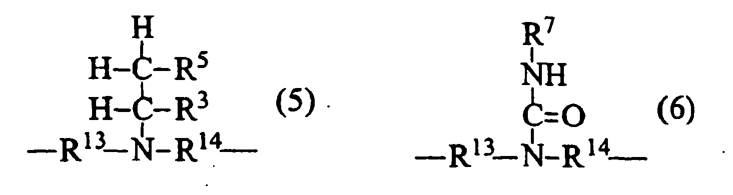

(in Formulae (5) and (6), R³, R⁴, R⁵ and R⁷ are respectively the same as the groups defined above; and each of R¹³ and R¹⁴ represents a substituted or unsubstituted bivalent organic group having 1 to 10 carbon atoms).
The curable resin (A) preferably has a number-average molecular weight of approximately 1,000 to 50,000, for the physical properties allowing hot-melt application.

In addition, the compound described as a curable resin having a silicon-containing functional group in international application PCT/JP2004/010549, which is a prior application by the present applicant, may be used as the curable resin (A) according to the present invention. However, the resin described in the above international application is liquid at room temperature, and thus, it is necessary to take a suitable action, for example, to modify the main chain skeleton of the polymer to have a larger molecular weight for use as a solid-phase resin, or to take a formulation for a composition solid at room temperature and suitable for hot-melt application with addition of a tackifier resin (C) and/or a thermoplastic component (D) described below in the present application.

In the present invention, a boron compound, specifically a boron halide or the complex thereof, is used as the curing catalyst (B) for promotion of hydrolysis of the hydrolysable silyl group by moisture in the atmosphere and subsequent condensation crosslinking reaction, and one or more kinds of boron compounds may be used in combination. Examples of the boron halides include boron trifluoride, boron trichloride, boron tribromide, boron triiodide and the like, and examples of the complexes include amine complexes (including ammonia complexes), alcohol complexes, ether complexes, carboxylic acid complexes and the like, of boron halide. The amine compound forming the amine complex is a compound having one or more primary, secondary or tertiary amino group, and may be a heterocyclic secondary or tertiary amine compound or an aminosilane compound; and examples thereof include ammonia, monoethylamine, triethylamine, pyridine, piperidine, aniline, morpholine, cyclohexylamine, n-butylamine, monoethanolamine, diethanolamine, triethanolamine, guanidine, 2,2,6,6-tetramethylpiperidine, 1,2,2,6,6-pentamethylpiperidine, N-methyl-3,3'-iminobis(propylamine), ethylenediamine, diethylenetriamine, triethylenediamine, pentaethylenediamine, 1,2-diaminopropane, 1,3-diaminopropane, 1,2-diaminobutane, 1,4-diaminobutane, 1,9-diaminononane, ATU (3,9-bis(3-aminopropyl)-2,4,8,10-tetraoxaspiro[5.5]undecane), CTU guanamine, dodecanoic dihydrazide, hexamethylenediamine, m-xylylenediamine, dianisidine, 4,4'-diamino-3,3'-diethyldiphenylmethane, diaminodiphenylether, 3,3'-dimethyl-4,4'-diaminodiphenylmethane, tolidine base, m-toluilenediamine, o-phenylenediamine, m-phenylenediamine, p-phenylenediamine, melamine, 1,3-diphenylguanidine, di-o-tolylguanidine, 1,1,3,3-tetramethylguanidine, bis(aminopropyl)piperazine, N-(3-aminopropyl)-1,3-propanediamine, bis(3-aminopropyl)ether, Jeffermine manufactured by Santechno Chemicals, piperazine, cis-2,6-dimethylpiperazine, cis-2,5-dimethylpiperazine, 2-methylpiperazine, N,N'-di-t-butylethylenediamine, 2-aminomethylpiperidine, 4-aminomethylpiperidine, 1,3-di-(4-pyperidyl)-propane, 4-aminopropylaniline, homopiperazine, N,N'-diphenylthiourea, N,N'-diethylthiourea, N-methyl-1,3-propanediamine, methylaminopropylamine, ethylaminopropylamine, ethylaminoethrylamine, laurylaminopropylamine, 2-hydroxyethylaminopropylamine, 1-(2-aminoethyl)piperazine, N-aminopropylpiperazine, 3-aminopyrrolidine, 1-o-tolylbiguanide, 2-aminomethylpiperazine, N-aminopropylaniline, diethylamine, dibutylamine, dihexylamine, di(2-ethylhexyl)amine, dioctylamine, dilaurylamine, 2-hydroxyethylaminopropylamine, laurylaminopropylamine, 2-aminomethylpiperidine, 4-aminomethylpiperidine, compounds represented by Formula: H₂N(C₂H₄NH)ₙH (n: ca. 5, trade name: Poly-8, manufactured by Toso Corporation), N-alkylmorpholines, 1,8-diazabicyclo[5.4.0]undeca-7-ene, 6-dibutylamino-1,8-diazabicyclo[5.4.0]undeca-7-ene, 1,5-diazabicyclo[4-3.0]nona-5-ene, 1,4-diazabicyclo[2.2.2]octane, pyridine, N-alkylpiperidines, 1,5,7-triazabicyclo[4.4.0]deca-5-ene, 7-methyl-1,5,7-triazabicyclo[4.4.0]deca-5-ene, γ-aminopropyltriethoxysilane, γ-aminopropylmethyldiethoxysilane, 4-amino-3-dimethylbutyltriethoxysilane, N-β-(aminoethyl)-γ-aminopropyltriethoxysilane, N-β-(aminoethyl)-γ-aminopropylmethyldiethoxysilane, N-3-[amino(dipropyleneoxy)]aminopropyltriethoxysilane, (aminoethylaminomethyl)phenethyltriethoxysilane, N-(6-aminohexyl)aminopropyltriethoxysilane, N-phenyl-γ-aminopropyltriethoxysilane, N-(2-aminoethyl)-11-aminoundecyltriethoxysilane and the like. Examples of the alcohols for forming the alcohol complex include primary alcohols such as methanol, ethanol, propanol and n-butanol, secondary alcohols such as isopropanol and 2-butanol, aromatic alcohols such as phenol, and the like. Examples of the ethers for forming the ether complex include linear ethers such as dimethylether, diethylether and n-dibutylether, cyclic ethers such as tetrahydrofuran, and the like. Examples of the carboxylic acid compounds for forming the carboxylic acid complex include aliphatic carboxylic acids such as acetic acid, EDTA and citric acid, aminopolycarboxylic acids, hydroxy acids, and the like. However, the boron halides and the components for the complex are not limited thereto. Among the boron halides and the complexes above, boron trifluoride complexes are preferable from the point of handling efficiency, and in particular, a boron trifluoride amine complex is effective.

The blending ratio of the curing catalyst (B) is preferably 0.001 to 5 parts by mass, particularly preferably 0.01 to 3 parts by mass, with respect to 100 parts by mass of the curable resin (A). When two or more compounds are used in combination, the total amount thereof is preferably in the range above. The boron halide and the complex thereof show respectively a distinctive action in an amount smaller than that of the organic metal compound, and thus very effective even when contained in a smaller amount.

The reactive hot-melt resin composition according to the present invention may contain an adhesive resin (C), a thermoplastic component (D), a second curing catalyst (E), a reactive diluent (F), and the like as needed, in addition to the curable resin (A) and the curing catalyst (B). The adhesive resin (C), thermoplastic component (D) and reactive diluent (F) to be used are preferably compatible with the curable resin (A), and an organic metal compound used in conventional hot-melt adhesives using a resin having a silicon-containing functional group as curing catalyst is used as the second curing catalyst (E).

Addition of an adhesive resin (C), which is effective in improving tackiness of the heat-melted curable resin (A) and the initial adhesiveness to the material to be bonded, leads to improvement in quick hardening efficiency and also fast stabilization of bonding, and consequently to improvement in handling efficiency, for example during fabrication and bonding. The adhesive resin (C) is not particularly limited, if it is compatible with the curable resin (A), and any normally-used resin is applicable, irrespective of whether it is liquid or solid at room temperature. Typical examples thereof include phenol resins, modified phenol resins (e.g., cashew oil-modified phenol resins, rosin phenol resins, polymerized rosins, polymerized rosin esters, tall oil-modified phenol resins, etc.), terpene phenol resins, xylene phenol resins, cyclopentadiene phenol resins, coumarone indene resins, DCPD resins, rosin resins, rosin ester resins, hydrogenated rosin ester resins, xylene resins, low-molecular weight polystyrene resins, styrene copolymer resins, petroleum resins (e.g., C5 hydrocarbon resins, C9 hydrocarbon resins, C5-C9 hydrocarbon copolymer resins, etc.), hydrogenated petroleum resins, terpene resins and the like. These resins may be used alone or in combination of two or more.

The blending ratio of the adhesive resin (C) is preferably 5 to 1,000 parts by mass, particularly preferably 20 to 200 parts by mass, with respect to 100 parts by mass of the curable resin (A).

The thermoplastic component (D) to be used is, for example, a thermoplastic resin or elastomer compatible with the curable resin (A), and typical examples thereof include ethylene-vinyl acetate copolymer resins, ethylene-(meth)acrylate copolymer resins, propylene-based copolymer resins, acrylic copolymer resins, polyamide resins, polyester resins, polyolefin resins, polyurethane resins, polycarbonate resins, styrene-isoprene-styrene copolymer resins, styrene-butadiene-styrene copolymer resins, styrene-ethylene-butylene-styrene copolymer resins, styrene-ethylene-propylene-styrene copolymer resins, ethylene-propylene copolymer resins, butyl rubbers, isobutylene rubbers, acrylic rubbers, polyurethane rubbers, waxes (PE wax, PP wax, paraffin wax, microcrystalline wax, Fischer-Tropsch wax), and the like. These resins may be used alone or in combination of two or more. Other examples thereof include thermoplastic elastomers including styrene-based elastomers such as block copolymers containing a styrene-predominant polymer block and a polymer block mainly having a conjugate diene such as butadiene or isoprene, and the hydrogenated derivatives thereof, and ethylene-α-olefin copolymer rubbers obtained by copolymerization of ethylene and α-olefin or by additional copolymerization thereof with an additional diene compound, and the like. Use of a PE(polyethylene) wax as the thermoplastic component (D) leads to large improvement in adhesiveness of the hardened product to polyethylene, and thus, gives a resin composition favorable for use in application demanding adhesion to polyethylene.

The blending ratio of the thermoplastic component (D) is preferably in the range of 3 to 1,000 wt parts, particularly preferably 5 to 200 parts by mass, with respect to 100 parts by mass of the curable resin (A).

The second curing catalyst (E) is a curing catalyst that is possibly used together with the curing catalyst above (B), and examples thereof include organic tin compounds and other organic metal compounds, bases such as amines, acids such as organic carboxylic and phosphoric acid compounds. In addition, water in air (moisture) also functions as a catalyst.

Examples of the organic tin compounds include dibutyltin dilaurate, dioctyltin dilaurate, dibutyltin dimalate, dioctyltin dimalate, dibutyltin phthalate, dioctyltin phthalate, stannous octanoate, dibutyltin methoxide, dibutyltin dimethoxide, dioctyltin dimethoxide, dibutyltin diacetylacetate, dioctyltin diacetylacetate, dibutyltin diversatate, dioctyltin diversatate, reaction products of dibutyltin oxide and a phthalic diester, tin stearate, and the like. Among the organic tin compounds above, dioctyltin compounds are preferable from the point of the hardening velocity of curable resin. The dioctyltin compounds are known to be higher in stability than dibutyltin compounds commonly used, and less hazardous or toxic. In addition to the tin compounds exemplified above, the dioctyltin compounds include the compounds represented by the following Formulae (7) and (8) wherein R¹⁶ represents an octyl group; and the compounds wherein u is an integer of 0 to 5 are particularly useful.

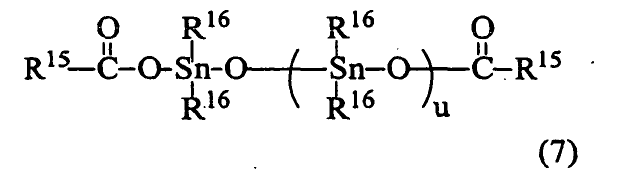

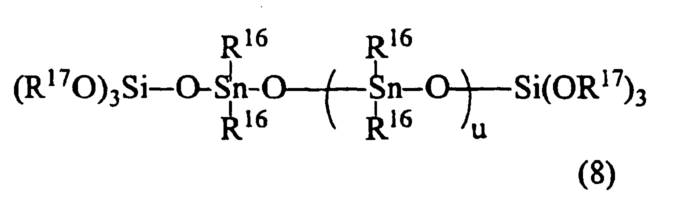

(wherein, R¹⁵ and R¹⁶ each independently represent a substituted or unsubstituted hydrocarbon group having 1 to 12 carbon atoms and may be the same as or different from each other; R¹⁷ represents an alkyl group having 1 to 4 carbon atoms; and u is an integer of 1 or more).
Formula (7) shows an organic tin compound usable as the second curing catalyst (E), poly(dialkylstanoxane) dicarboxylate. Examples of the hydrocarbon groups represented by R¹⁵ and R¹⁶ include straight-chain or branched linear alkyl groups such as methyl, ethyl, propyl, isopropyl, butyl, isobutyl, S-butyl, t-butyl, pentyl, hexyl, heptyl, octyl, 2-ethylhexyl, decyl and lauryl; substituted or unsubstituted phenyl groups; and the like. The number u is an integer of 1 or more, and preferably an integer of 1 to 3.

Typical examples of the poly(dialkylstanoxane) dicarboxylates represented by the Formula (7) include tetraalkyldistanoxane dicarboxylates such as 1,1,3,3-tetramethyl-1,3-bis(acetoxy)distanoxane, 1,1,3,3-tetramethyl-1,3-bis(butyryloxy)distanoxane, 1,1,3,3-tetramethyl-1,3-bis(octanoyloxy)distanoxane, 1,1,3,3-tetramethyl-1,3-bis(2-ethylhexanoyloxy)distanoxane, 1,1,3,3-tetramethyl-1,3-bis(lauroyloxy)distanoxane, 1,1,3,3-tetrabutyl-1,3-bis(acetoxy)distanoxane, 1,1,3,3-tetrabutyl-1,3-bis(butyryloxy)distanoxane, 1,1,3,3-tetrabutyl-1,3-bis(octanoyloxy)distanoxane, 1,1,3,3-tetrabutyl-1,3-bis(2-ethylhexanoyloxy)distanoxane, 1,1,3,3-tetrabutyl-1,3-bis(lauroyloxy)distanoxane, 1,1,3,3-tetraoctyl-1,3-bis(acetoxy)distanoxane, 1,1,3,3-tetraoctyl-1,3-bis(butyryloxy)distanoxane, 1,1,3,3-tetraoctyl-1,3-bis(octanoyloxy)distanoxane, 1,1,3,3-tetraoctyl-1,3-bis(2-ethylhexanoyloxy)distanoxane, 1,1,3,3-tetraoctyl-1,3-bis(lauroyloxy)distanoxane, 1,1,3,3-tetralauryl-1,3-bis(acetoxy)distanoxane, 1,1,3,3-tetralauryl-1,3-bis(butyryloxy)distanoxane, 1,1,3,3-tetralauryl-1,3-bis(octanoyloxy)distanoxane, 1,1,3,3-tetralauryl-1,3-bis(2-ethylhexanoyloxy)distanoxane and 1,1,3,3-tetralauryl-1,3-bis(lauroyloxy)distanoxane; hexaalkyltristanoxane dicarboxylates such as 1,1,3,3,5,5-hexamethyl-1,5-bis(acetoxy)tristanoxane, 1,1,3,3,5,5-hexamethyl-1,5-bis(butyryloxy)tristanoxane, 1,1,3,3,5,5-hexamethyl-1,5-bis(octanoyloxy)tristanoxane, 1,1,3,3,5,5-hexamethyl-1,5-bis(2-ethylhexanoyloxy)tristanoxane, 1,1,3,3,5,5-hexamethyl-1,5-bis(lauroyloxy)tristanoxane, 1,1,3,3,5,5-hexabutyl-1,5-bis(acetoxy)tristanoxane, 1,1,3,3,5,5-hexabutyl-1,5-bis(butyryloxy)tristanoxane, 1,1,3,3,5,5-hexabutyl-1,5-bis(octanoyloxy)tristanoxane, 1,1,3,3,5,5-hexabutyl-1,5-bis(2-ethylhexanoyloxy)tristanoxane, 1,1,3,3,5,5-hexabutyl-1,5-bis(lauroyloxy)tristanoxane, 1,1,3,3,5,5-hexalauryl-1,5-bis(acetoxy)tristanoxane, 1,1,3,3,5,5-hexalauryl-1,5-bis(butyryloxy)tristanoxane, 1,1,3,3,5,5-hexalauryl-1,5-bis(octanoyloxy)tristanoxane, 1,1,3,3,5,5-hexalauryl-1,5-bis(2-ethylhexanoyloxy)tristanoxane, 1,1,3,3,5,5-hexalauryl-1,5-bis(lauroyloxy)tristanoxane; and the like.

Alternatively, poly(dialkylstanoxane) disilicate compounds produced in reaction of the poly(dialkylstanoxane) dicarboxylate represented by Formula (7) above and a silicate compound represented by the following Formula (9) may also be used as the second curing catalyst (E).

(R¹⁸)ᵥ-Si-(OR¹⁷)ᵥ₋₄ (9)

(in Formula (9), R¹⁷ and R¹⁸ represent respectively an alkyl group having 1 to 4 carbon atoms; v is an integer of 0 to 3; R¹⁷ and R¹⁸ may be the same as or different from each other; multiple groups R¹⁷ or R¹⁸, when present, may be the same as or different from each other).
Typical examples of the alkyl groups, R¹¹ and R¹⁸ of Formula (9), include groups such as methyl, ethyl, propyl, isopropyl, butyl, isobutyl, s-butyl and t-butyl. Typical examples of the silicate compound represented by Formula (9) for use include tetraalkoxysilanes such as tetramethoxysilane, tetraethoxysilane, tetrapropoxysilane, tetraisopropoxysilane, and tetrabutoxysilane; trialkoxymonoalkylsilanes such as triethoxymethylsilane, triethoxyethylsilane, triethoxypropylsilane, triethoxyisopropylsilane and triethoxybutylsilane; dialkoxydialkylsilanes such as diethoxydimethylsilane, diethoxydiethylsilane, diethoxydipropylsilane, diethoxydiisopropylsilane and diethoxydibutylsilane; monoalkoxytrialkylsilanes such as ethoxytrimethylsilane, ethoxytriethylsilane, ethoxytripropylsilane, ethoxytriisopropylsilane, and ethoxytributylsilane; and the like. In addition, hydrolysates of these alkoxysilanes may also be used similarly.

The reaction between the poly(dialkylstanoxane) dicarboxylate represented by Formula (7)and the silicate compound represented by Formula (9) or the hydrolysate thereof proceeds when they are heated at 100 to 130°C for about 1 to 3 hours and the carboxylic ester generated is evaporated under reduced pressure. It is then preferable to advance the reaction completely until the carboxyl group disappears, by adjusting the ratio of the alkoxy group to an equivalence to 1 equivalence of the carboxyl group. The residual carboxyl group causes deterioration of catalytic activity. The reaction may be carried out in the presence or absence of a solvent, but is preferably carried out in the absence of solvent. The compounds represented by Formulas (8) are examples of the reaction product, poly(dialkylstanoxane) disilicate compounds.

The organic tin compounds above are commercially available, and examples of the commercial products include, but are not limited to, products manufactured by Nitto Kasei (trade name: T-100, U-100, U-130, U-15, U-20, U-200, U-220, U-230, U-28, U-300, U-303, U-317, U-340, U-400, U-50, U-500, U-550, U-700, U-700 ES, U-8, U-800, U-810, U-830, U-ES, U-280, U-350, U-360, U-840, U-850, U-860 and U-870), products manufactured by Sankyo Organic Chemicals (trade name: SCAT-1, SCAT-1W, SCAT-4A, SCAT-7, SCAT-8, SCAT-8B, SCAT-24, SCAT-25, SCAT-27, SCAT-31A, SCAT-32A, SCAT-46A, SCAT-51, SCAT-52A, No.918, STANN BL and STANN SNT-1F), products manufactured by Sumika Bayer Urethane (trade name: Desmorapid PA and Desmorapid SO), and the like.

Examples of the organic metal compounds usable as the second curing catalyst (E) other than the organic tin compounds include, but are not limited to, bismuth compounds corresponding to the organic tin compounds above wherein tin is replaced with bismuth; titanate compounds such as tetrabutyl titanate, tetraisopropyl titanate and triethanolamine titanate; metal carboxylate salts such as lead octanoate, lead naphthenate, nickel naphthenate, lithium naphthenate and cobalt naphthenate; metal acetylacetonate complexes such as aluminum acetylacetonate complex and vanadium acetylacetonate complex; products manufactured by Nitto Kasei. (trade name: U-600 and U-660), and the like.

Examples of the amines usable as the second curing catalyst (E) include, but are not limited to, aminosilane compounds such as γ-aminopropyltrimethoxysilane, γ-aminopropylmethyldimethoxysilane, γ-aminopropyltriethoxysilane, γ-aminopropylmethyldiethoxysilane, aminophenyltrimethoxysilane, 4-amino-3-dimethylbutyltrimethoxysilane, 4-amino-3-dimethylbutylmethyldimethoxysilane, 4-amino-3-dimethylbutyltriethoxysilane, 4-amino-3-dimethylbutylmethyldiethoxysilane, N-phenyl-γ-aminopropyltrimethoxysilane, N-naphthyl-γ-aminopropyltrimethoxysilane, N-phenyl-γ-aminopropylmethyldimethoxysilane, N-naphthyl-γ-aminopropylmethyldimethoxysilane, N-(n-butyl)-γ-aminopropyltrimethoxysilane, N-(n-butyl)-γ-aminopropylmethyldimethoxysilane, N-ethyl-γ-aminopropyltrimethoxysilane, N-ethyl-γ-aminopropylmethyldimethoxysilane, N-methyl-γ-aminopropyltrimethoxysilane, N-methyl-γ-aminopropylmethyldimethoxysilane, N-β-(aminoethyl)-γ-aminopropyltrimethoxysilane, N-β-(aminoethyl)-γ-aminopropyltriethoxysilane, N-β-(aminoethyl)-y-aminopropylmethyldimethoxysilane, N-β-(aminoethyl)-γ-aminopropylmethyldiethoxysilane, N-3-[amino(dipropyleneoxy)]aminopropyltrimethoxysilane, (aminoethylaminomethyl)phenethyltrimethoxysilane, N-(6-aminohexyl)aminopropyltrimethoxysilane, N-(2-aminoethyl)-11-aminoundecyltrimethoxysilane and bis(trimethoxysilylpropyl)amine; aliphatic amines such as ethylenediamine, diethylenetriamine, triethylenetetramine, tetraethylenepentamine, diethylaminopropylamine, hexamethylenediamine, methylpentamethylenediamine, trimethylhexamethylenediamine, guanidine, trimethylamine, triethylamine, tributylamine and oleylamine; alicyclic amines such as menthenediamine, isophoronediamine, norbornanediamine, piperidine, N,N'-dimethylpiperazine, N-aminoethylpiperazine, 1,2-diaminocyclohexane, bis(4-amino-3-methylcyclohexyl)methane, bis(4-amino-methylcyclohexyl)methane, polycyclohexylpolyamine and 1,8-diazabicyclo[5,4,0]undecene-7 (DBU); aromatic amines such as meta-phenylenediamine and 4,4'-diaminodiphenylsulfone; aliphatic aromatic amines such as m-xylenediamine, benzyldimethylamine, 2-(dimethylaminomethyl)phenol and 2,4,6-tris(dimethylaminomethyl)phenol; ether bond-containing amines such as 3,9-bis(3-aminopropyl)-2,4,8,10-tetraoxaspiro[5,5]undecane (ATU), morpholine, N-methylmorpholine, polyoxypropylenediamine, polyoxypropylenetriamine, and polyoxyethylenediamine; hydroxyl group-containing amines such as diethanolamine and triethanolamine; polyamides obtained in reaction of a dimer acid with a polyamine such as diethylenetriamine or diethylenetetramine; polyamide amines of a polyamide prepared by using a polycarboxylic acid other than dimer acid; imidazoles such as 2-ethyl-4-methylimidazole; polyoxypropylene-based amines such as dicyandiamide, polyoxypropylene-based diamine and polyoxypropylene-based triamine; modified amines such as epoxy-modified amines obtained in reaction of the amine above with an epoxy compound, Mannich modified amines prepared in reaction of the amine above with formalin and phenol, Michael-addition modified amine and ketimine; amine salts such as 2,4,6-tris(dimethylaminomethyl)phenol 2-ethylhexanoate salt; quaternary ammonium salts such as tetramethylammonium chloride and benzalkonium chloride; DABCO (registered trade name) and DABCOBL series products manufactured by Sankyo Aeroproducts; straight-chain or cyclic tertiary amine salts containing multiple nitrogen atoms such as 1,8-diazabicyclo[5-4.0]-7-undecene, 1,5-diazabicyclo[4.3.0]-5-nonene and 1,4-diazabicyclo[2.2.2]octane; aminosilanes such as γ-aminopropyltrimethoxysilane and γ-aminopropyltriethoxysilane; products manufactured by Sumika Bayer Urethane (trade name: Desmorapid DB, Desmorapid PP, Desmorapid PV, Desmorapid 10/9 and Desmorapid LA); and the like.

Examples of the organic phosphoric acid compounds usable as the second curing catalyst (E) include, but are not limited to, monomethyl phosphate, dimethyl phosphate, trimethyl phosphate, monoethyl phosphate, diethyl phosphate, triethyl phosphate, di-n-butyl phosphate, mono-n-butyl phosphate, tri-n-butyl phosphate, triphenyl phosphate and the like.

The second curing catalysts (E) may be used alone or in combination of two or more. The blending ratio of the second curing catalyst (E) is preferably 0.01 to 10 parts by mass, particularly preferably 0.02 to 5 parts by mass, with respect to 100 parts by mass of the curable resin (A).

The reactive diluent (F) is used favorably for elongation or control of the open time of the reactive hot-melt resin composition, and specifically, a compound liquid at room temperature that is compatible with the curable resin (A) and contains the hydrolysable silyl (bi- or trifunctional) group above as a reactive group is used. Use of a diluent without a reactive group allows elongation of the open time, but results in deterioration in heat resistance of the resin composition after hardening. Examples of the compounds compatible with the curable resin (A) above include acrylic compounds and others; those having a molecular weight of 1,000 to 5,000 are preferable; and a mixture of two or more compounds or a polymeric composition may be used (the molecular weight of polymer is weight-averaged). Practical examples of the reactive diluents (F) include acrylic polymers having a hydrolysable silyl group and a glass transition temperature Tg of 0°C or lower, preferably -20°C or lower. The blending ratio of the reactive diluent (F) when used is preferably 3 to 30 parts by mass, most preferably 5 to 20 parts by mass, with respect to 100 parts by mass of the curable resin (A), and it is possible to elongate the open time approximately by 10 to 90 seconds without deterioration in heat resistance, adhesion characteristics and others, and thus, to adjust the open time adequately by the blending ratio. When multiple compounds are used, the blending ratio is specified by the total amount.

Examples of commercially available reactive diluents (F) include, but are not limited to, silyl group-containing liquid acrylic oligomers such as reactive plasticizer XPR series products manufactured by Toagosei (trade name: XPR-15, XPR-22, etc.), products manufactured by Soken Chemical & Engineering Co. (trade name: Actflow AS-300, Actflow AS-301 and Actflow ASM-4001), products manufactured by Kaneka Corporation (trade name: SA100S), and the like.

The reactive hot-melt resin composition according to the present invention prepared by using the components described above is superior in hardening efficiency at room temperature, and thus can be used favorably in various applications such as adhesive, sealant, paint, coat material, filler (e.g., sealant for covering the material being injected into cracks and for preventing leakage thereof in repairing concrete cracks), mold material, and covering material, and particularly useful for adhesion of auto parts, civil and construction structural parts, and the like. When used in these applications, the resin composition may contain a silane-coupling agent, a filler and various additives as needed according to the requirements in respective applications. In particular, a silane-coupling agent and a filler are often added. Examples of the various additives include dehydrating agent, plasticizer, aging inhibitor or ultraviolet absorbent, pigment, titanate coupling agent, aluminum coupling agent and the like.

Typical examples of the silane-coupling agents include, but are not limited to, isocyanatosilane and isothiocyanatosilane compounds such as γ-isocyanatopropyltrimethoxysilane, γ-isocyanatopropylmethyldimethoxysilane, γ-isocyanatopropyltriethoxysilane, γ-isocyanatopropylmethyldiethoxysilane, γ-isocyanatopropyltrimethoxysilane, γ-isocyanatopropylmethyldimethoxysilane, γ-isocyanatopropyltriethoxysilane, γ-isocyanatopropylmethyldiethoxysilane and γ-isocyanatopropyltriethoxysilane; aminosilane compounds such as γ-aminopropyltrimethoxysilane, γ-aminopropylmethyldimethoxysilane, γ-aminopropyltriethoxysilane, γ-aminopropylmethyldiethoxysilane, aminophenyltrimethoxysilane, 4-amino-3-dimethylbutyltrimethoxysilane, 4-amino-3-dimethylbutylmethyldimethoxysilane, 4-amino-3-dimethylbutyltriethoxysilane, 4-amino-3-dimethylbutylmethyldiethoxysilane, N-phenyl-γ-aminopropyltrimethoxysilane, N-naphthyl-γ-aminopropyltrimethoxysilane, N-phenyl-γ-aminopropylmethyldimethoxysilane, N-naphthyl-γ-aminopropylmethyldimethoxysilane, N-(n-butyl)-γ-aminopropyltrimethoxysilane, N- (n-butyl)-γ-aminopropylmethyldimethoxysilane, N-ethyl-γ-aminopropyltrimethoxysilane, N-ethyl-γ-aminopropylmethyldimethoxysilane, N-ethyl-aminoisobutyltrimethoxysilane, N-methyl-γ-aminopropyltrimethoxysilane, N-methyl-γ-aminopropylmethyldimethoxysilane, N-β-(aminoethyl)-γ-aminopropyltrimethoxysilane, N-β- (aminoethyl) -γ-aminopropyltriethoxysilane, N-β-(aminoethyl)-γ-aminopropylmethyldimethoxysilane, N-β- (aminoethyl) -γ-aminopropylmethyldiethoxysilane, N-3-[amino(dipropyleneoxy)]aminopropyltrimethoxysilane, (aminoethylaminomethyl)phenethyltrimethoxysilane, N-(6-aminohexyl)aminopropyltrimethoxysilane, N-(2-aminoethyl)-11-aminoundecyltrimethoxysilane and bis(trimethoxysilylpropyl)amine; mercaptosilane compounds such as γ-mercaptopropyltrimethoxysilane, γ-mercaptopropylmethyldimethoxysilane, γ-mercaptopropyltriethoxysilane and γ-mercaptopropylmethyldiethoxysilane; epoxysilanes such as β-(3,4-epoxycyclohexyl)ethyltrimethoxysilane, γ-glycidoxypropyltrimethoxysilane, γ-glycidoxypropylmethyldimethoxysilane, γ-glycidoxypropyltriethoxysilane and γ-glycidoxypropylmethyldiethoxysilane; acrylsilane compounds such as γ-acryloxypropyltrimethoxysilane, γ-acryloxypropylmethyldimethoxysilane, γ-acryloxypropyltriethoxysilane and γ-acryloxypropylmethyldiethoxysilane; methacrylsilane compounds such as γ-methacryloxypropyltrimethoxysilane, γ-methacryloxypropylmethyldimethoxysilane, γ-methacryloxypropyltriethoxysilane and γ-methacryloxypropylmethyldiethoxysilane; vinylsilane compounds such as vinyltrimethoxysilane, vinylmethyldimethoxysilane, vinyltriethoxysilane, vinylmethyldiethoxysilane and vinyltrichlorosilane; sulfide group-containing silane compounds such as bis(3-trimethoxysilylpropyl)tetrasulfane, bis(3-methyldimethoxysilylpropyl)tetrasulfane, bis(3-triethoxylsilylpropyl)tetrasulfane, bis(3-methyldiethoxysilylpropyl)tetrasulfane, bis(3-trimethoxysilylpropyl)disulfide, bis(3-methyldimethoxysilylpropyl)disulfide, bis(3-triethoxylsilylpropyl)disulfide and bis(3-methyldiethoxysilylpropyl)disulfide; isocyanuratosilane compounds such as 1,3,5-N-tris(3-trimethoxysilylpropyl)isocyanuratosilane, 1,3,5-N-tris(3-methyldimethoxysilylpropyl)isocyanuratosilane, 1,3,5-N-tris(3-triethoxysilylpropyl)isocyanuratosilane, 1,3,5-N-tris(3-methyldiethoxysilylpropyl)isocyanuratosilane; and the like.

The silane-coupling agents may be used alone or in combination of two or more, and an amino group-containing silane-coupling agent is used favorably. The blending ratio of the silane-coupling agent is preferably 0.1 to 20 parts by mass, particularly preferably 1 to 10 parts by mass, with respect to 100 parts by mass of the curable resin (A).

Examples of the fillers include calcium carbonate, various processed calcium carbonates, fumed silica, clay, talc, various micro-balloon-shaped ceramics, and the like.

The aging inhibitor or the ultraviolet absorbent is selected as needed from those widely used for prevention of deterioration of various resins, and favorable compounds include compounds containing a primary amino, secondary amino, tertiary amino, hydroxyl, carboxyl or mercapto group in the molecule. Typical examples thereof include, but are not limited to, triacetonediamine, poly[(6-morpholino-s-triazine-2,4-diyl) {2,2,6,6-tetramethyl-4-pyperidyl}imino]hexamethylene{2,2,6,6-tetramethyl-4-pyperidyl}imino]], bis(2,2,6,6-tetramethyl-4-pyperidyl) sebacate, bis(1,2,2,6,6-pentamethyl-4-pyperidyl) sebacate, 4-benzoyloxy-2,2,6,6-tetramethylpiperidine, poly(2,2,4-trimethyl-1,2-dihydroquinoline), 6-ethoxy-2,2,4-trimethyl-1,2-dihydroquinoline, N,N'-diphenyl-p-phenylenediamine, N-isopropyl-N'-phenyl-p-phenylenediamine, N-1,3-dimethylbutyl-N'-phenyl-p-phenylenediamine, mixed N,N'-diallyl-p-phenylenediamine, alkylated diphenrylamines, 8-acetyl-3-dodecyl-7,7,9,9-tetramethyl-1,3,8-triazaspiro[4.5]decan-2,4-dione, poly[(6-(1,1,3,3-tetramethylbutyl)amino-1,3,5-triazine-2,4-diyl){2,2,6,6-tetramethyl-4-pyperidyl}imino]hexamethylene{2,2,6,6-tetramethyl-4-pyperidyl}imino}}, N,N'-bis(3-aminopropyl)ethylenediamine-2,4-bis[N-butyl-N-(1,2,2,6,6-pentamethyl-4-pyperidyl)amino]-6-chloro-1,3,5-triazine condensates, diphenylguanidine, di-o-tolylguanidine, N-cyclohexylbenzothiazyl-sulfenamide, 2,2'-dihydroxy-4-methoxybenzophenone, 2-hydroxy-4-n-octyloxybenzophenone, 2-hydroxy-4-methoxybenzophenone, 2-hydroxy-4-methoxybenzophenone trihydrate, 2,4-dihydroxybenzophenone, 2-hydroxy-4-methoxybenzophenone-5-sulfuric acid trihydrate, 4-dodecyloxy-2-hydroxybenzophenone, 4-benzyloxy-2-hydroxybenzophenone, 2,2',4,4'-tetrahydroxybenzophenone, 2,2'-dihydroxy-4,4'-dimethoxybenzophenone, 2-hydroxy-4-octoxybenzophenone, 2-hydroxy-4-octoxybenzophenone, 2-(2'-hydroxy-5'-t-octylphenyl)benzotriazole, 2-(2'-hydroxy-5'-methylphenyl)benzotriazole, 2-(2'-hydroxy-3',5'-di-t-butylphenyl)-5-chlorobenzotriazole, 2-(2'-hydroxy-3'-t-butyl-5'-methylphenyl)-5-chlorobenzotriazole, 2-(2'-hydroxy-3',5'-di-t-amylphenyl)-5-chlorobenzotriazole, 2-(2'-hydroxy-3',5'-t-butylphenyl)benzotriazole, 2-(2-hydroxy-4-octyloxyphenyl)-2H-benzotriazole, 2-(2-hydroxy-5-methylphenyl)-2H-benzotriazole, 5-chloro-2-(3,5-di-t-butyl-2-hydroxyphenyl)-2H-benzotriazole, 2-(3-t-butyl-2-hydroxy-5-methylphenyl)-5-chloro-2H-benzotriazole, 2-(3,5-di-t-pentyl-2-hydroxyphenyl)-2H-benzotriazole, 2-(3,5-di-t-butyl-2-hydroxyphenyl)-2H-benzotriazole, 2-(2-hydroxy-5-t-octylphenyl)-2H-benzotriazole, 2-[2'-hydroxy-3'-(3",4",5",6"-tetrahydrophthalimide-methyl)-5'-methylphenyl]benzotriazole, 2-(2'-hydroxy-3',5'-di-t-amylphenyl)benzotriazole, 2-(2-hydroxy-3-dodecyl-5-methylphenyl)benzotriazole, 2-[2-hydroxy-3,5-bis(α,α-dimethylbenzyl)phenyl]-2H-benzotriazole, n-hexadecyl 3,5-di-t-butyl-4-hydroxybenzoate, n-hexadecyl 3,5-di-t-butyl-4-hydroxybenzoate, 2',4'-di-t-butylphenyl 3,5-di-t-butyl-4-hydroxybenzoate, 1,3,5-tris(4-t-butyl-3-hydroxy-2,6-dimethylbenzyl)isocyanuric acid, tris(3,5-di-t-butyl-4-hydroxybenzyl) isocyanurate, 1,3,5-tris(3,5-di-t-butyl-4-hydroxybenzyl)isocyanuric acid, ethylene glycol bis[3-(3-t-butyl-4-hydroxy-5-methylphenyl)propionate], tetrakis[methylene-3(3',5'-di-t-butyl-4'-hydroxyphenyl)propionato]methane, n-octadecyl 3(3',5'-di-t-butyl-4'-hydroxyphenyl)propionate, triethylene glycol bis[3-(3-t-butyl-4-hydroxy-5-methylphenyl)propionate], isooctyl 3-(3,5-di-t-butyl-4-hydroxyphenyl)propionate, 1,6-hexanediol bis[3-(3,5-di-t-butyl-4-hydroxyphenyl)propionate], 2,2-thio-diethylene bis[3-(3,5-di-t-butyl-4-hydroxyphenyl)propionate], 4,4'-butylidene-bis(3-methyl-6-t-butylphenol), 2,2'-butylidene-bis(4-methyl-6-t-butylphenol), 2,2'-butylidene-bis(4-ethyl-6-t-butylphenol), 4,4'-thio-bis(3-methyl-6-t-butylphenol), 2,2'-methylene-bis[4-methyl-6-t-butylphenol], 2,2'-methylene-bis(4-methyl -t-butylphenol), 2,2'-methylene-bis(4-ethyl-t-butylphenol), 6-(2-benzotriazolyl)-4-t-octyl-6'-t-butyl-4'-methyl-2,2'-methylenebisphenol, styrenated phenols, 2,6-di-t-butyl-4-methylphenol, 2,4-dimethyl-6-(1-methylcyclohexyl)phenol, 2-[4,6-bis(2,4-dimethylphenyl)-1,3,5-triazin-2-yl]-5-(octyloxy)phenol, 2,6-di-t-butyl-4-ethylphenol, 2-(2H-benzotriazol-2-yl)-4-menthyl-6-(3,4,5,6-tetrahydrophthalimidylmethyl)phenol, 2-(4,6-diphenyl-1,3,5-triazin-2-yl)-5-[(hexyl)oxy]phenol, 2,5-di-t-butylhydroquinone, poly(2,2,4-trimethyl-1,2-dihydroquinone), 6-ethoxy-2,2,4-trimethyl-1,2-dihydroquinone, 2,5-di-t-amylhydroquinone, 4,4'-butylidene-bis(6-t-butyl-m-cresol), 2,2'-methylene-bis[6-(1-methylcyclohexyl)-p-cresol], 1-[2-(3-{3,5-di-t-butyl-4-hydroxyphenyl}propionyloxy)ethyl]-4-{3-(3,5-di-t-butyl-4-hydroxyphenyl)propionyloxy}-2,2,6,6-tetramethylpiperidine, S-(3,5-di-t-butyl-4-hydroxybenzyl)-2-ethyl-n-hexyl-thioglycolate, 4,4'-thiobis(6-t-butyl-m-cresol), p-benzoquinone dioxime, 1,6-bis(4-benzoyl-3-hydroxyphenoxy)hexane, 1,4-bis(4-benzoyl-3-hydroxyphenoxy)butane, phenyl salicylate, 4-t-butylphenyl salicylate, 1,1,3-tris(2-methyl-t-butyl-4-hydroxy-5-t-butylphenyl)butane, 1,1-bis(4-hydroxyphenyl)cyclohexane, 3,9-bis[2-(3-(3-t-butyl-4-hydroxy-5-methylphenyl)propionyloxy)-1,1-dimethylethyl]-2,4,8,10-tetraoxaspiro[5,5]undecane, 2-t-butyl-6-(3'-t-butyl-5'-methyl-2'-hydroxybenzyl)-4-methylphenyl acrylate, dimethyl succinate/1-(2-hydroxyethyl)-4-hydroxy-2,2,6,6-tetramethylpiperidine polycondensates, condensates of methyl-3-[3-t-butyl-5-(2H-benzotriazol-2-yl)-4-hydroxyphenyl] propionate and polyethylene glycol, 3,4-dihydro-2,5,7,8-tetramethyl-2-(4,8,12-trimethyltridecyl)-2H-benzopyran-6-ol and glycerol/low-density polyethylene mixtures or stearic acid mixtures containing the same, mixtures of bis(ethyl 3,5-di-t-butyl-4-hydroxybenzylsulfonate)calcium and polyethylene wax, 2,4-bis[(octylthio)methyl]-o-cresol, N,N'-hexamethylene-bis(3,5-di-t-butyl-4-hydroxy-hydrocinnamide), 3,5-di-t-butyl-4-hydroxybenzylphosphonate diethylester, 1,3,5-trimethyl-2,4,6-tris(3,5-di-t-butyl-4-hydroxybenzyl)benzene, 2-(3,5-di-t-butyl-4-hydroxybenzyl)-2-n-butylmalonate bis(1,2,2,6,6-pentamethyl-4-pyperidyl), 2,3-bis[(3-(3,5-dit-butyl-4-hydroxyphenyl)propionyl)]propionohydrazide, 2,4-bis(n-octylthio)-6-(4-hydroxy-3,5-di-t-butylanilino)-1,3,5-triazine, 2-hydroxy-4-methoxy-2'-carboxybenzophenone, mercaptobenzothiazole, 2-mercaptobenzimidazole, products manufactured by Sankyo LifeTech Co., Ltd. (trade name: Sanol LS-765, Sanol LS-292, Sanol LS-944, Sanol LS-440, Sanol LS-770, and Sanol LS-744), products manufactured by Ciba Specialty Chemicals (trade name: Tinuvin 123, Tinuvin 292, and Tinuvin 144), and the like.

Among the aging inhibitors or ultraviolet absorbents above, a compound prepared in reaction of a compound having a functional group reactive with isocyanate group (for example, primary amino, secondary amino, hydroxyl, carboxyl or mercapto group) in the molecule and the compound (CC) can also be used as the aging inhibitor or ultraviolet absorbent. Use of such a compound is effective in increasing the efficiency of anti-aging activity and ultraviolet absorption.

The aging inhibitors or ultraviolet absorbents may be used alone or in combination of two or more. The blending ratio of the aging inhibitor or ultraviolet absorbent is preferably 0.001 to 10 parts by mass, more preferably 0.01 to 5 parts by mass and most preferably 0.1 to 2 parts by mass, with respect to 100 parts by mass of the curable resin (A).

Examples of the dehydrating agents include, but are not limited to, calcium oxide, magnesium oxide, zinc oxide, calcium chloride, orthosilicate esters, silane-coupling agents such as vinyltrimethoxysilane, silicate compounds such as methyl silicate and ethyl silicate, activated carbon, zeolite and the like.

Examples of the plasticizers for use include phthalic esters such as dioctyl phthalate and dibutyl phthalate, aliphatic carboxylic esters such as dioctyl adipate and dibutyl sebacate, and the like.

The reactive hot-melt resin composition according to the present invention is prepared by melting and mixing a curable resin (A), a curing catalyst (B), and as needed other additive components under heat in an environment separated from moisture, and used favorably as a reactive hot-melt adhesive. When the heat-melted curable resin (A) becomes into contact with moisture of the air in the presence of the curing catalyst (B), the reactive hot-melt resin composition initiates hydrolysis, condensation and crosslinking reaction of the silicon-containing functional group and hardens rapidly even at room temperature. The period needed for hardening at room temperature is usually several to several dozen minutes, which is significantly shorter than that for conventional reactive hot-melt adhesives.

### Example 1

Each of the resin composition (1) to (8) was prepared in the following manner, and the hardening efficiency of the resin composition was evaluated by measuring the softening temperature thereof.

### <Resin composition (1)>

In a reaction container placed was 500 g of a silane-modified amorphous poly-α-olefin resin (containing trimethoxysilyl group, trade name: VESTOPLAST 206, manufactured by Degussa Japan), with heat to 150°C under reduced pressure, allowing dehydration of the resin for 30 minutes. To this resin, 0.5 g of boron trifluoride piperidine complex was added and the mixed by stirring them at a temperature of 150°C for 30 minutes, to give a resin composition (1).

### <Resin composition (2)>

A resin composition (2) was prepared in the same manner as the resin composition (1), except that no boron trifluoride piperidine complex was added.

### <Resin composition (3)>

A resin composition (3) was prepared in the same manner as the resin composition (1), except that the boron trifluoride piperidine complex was replaced with 0.5 g of FeCl₃.

### <Resin composition (4)>

A resin composition (4) was prepared in the same manner as the resin composition (1), except that the boron trifluoride piperidine complex was replaced with 0.5 g of AlCl₃.

### <Resin composition (5)>

A resin composition (5) was prepared in the same manner as the resin composition (1), except that the boron trifluoride piperidine complex was replaced with 0.5 g of ZnCl₂.

### <Resin composition (6)>

A resin composition (6) was prepared in the same manner as the resin composition (1), except that the boron trifluoride piperidine complex was replaced with 0.5 g of ZrCl₄.

### <Resin composition (7)>

A resin composition (7) was prepared in the same manner as the resin composition (1), except that the boron trifluoride piperidine complex was replaced with 0.5 g of a dibutyltin catalyst (trade name: No.918, manufactured by Sankyo Organic Chemicals).

### <Resin composition (8)>

A resin composition (8) was prepared in the same manner as the resin composition (1), except that the boron trifluoride piperidine complex was replaced with 0.5 g of SbF₆⁻-based aromatic sulfonium salt (trade name: San-Aid SI-145, manufactured by Sanshin Chemical Industry).

### (Measurement of softening temperature)

A pair of canvas was bonded with each of the resin compositions (1) to (8) prepared at 150°C and the softening temperature thereof after a predetermined time was measured. Specifically, a resin composition in the molten state was applied on a canvas of 2.5 cm in width; the other canvas is bonded thereto immediately (bonding surface area: 2.5 x 2.5 cm²) in an environment at 23°C and a relative humidity of 50%; and the bonded canvas was left for 5 minutes or 3 hours. Then, one canvas is fixed while the other canvas is connected to a weight of 500 gf; the temperature was raised gradually until the weight dropped, according to JIS K6833. The temperature at which the weight was dropped was the softening temperature of the resin composition. The measurement was repeated trice, and the average was used. The results of measurement are summarized in Table 1. In Table, "-" indicates that the resin composition was not cured sufficiently.

As apparent from Table 1, the resin composition (1) prepared by using the boron trifluoride piperidine complex as curing catalyst hardened within 5 minutes after application, while each of the resin compositions prepared by using other curing catalyst such as metal halide or organic tin compound required an elongated period for hardening. Here, it is practically important in judging satisfaction of the heat resistance of resin composition, to know whether the softening temperature thereof after hardening is at least 60°C or not, but among the hardened products from the resin compositions (1) to (8), only the composition (1) had a softening temperature of higher than 60°C. This softening temperature is one that has not been observed with conventional resins.

**(Table 1) Softening temperature of resin composition**

| Measuring time | Softening temperature (°C) | | | | | | | |
|---|---|---|---|---|---|---|---|---|
| | Resin composition | | | | | | | |
| | (1) | (2) | (3) | (4) | (5) | (6) | (7) | (8) |
| After 5 minutes | 87 | - | - | - | - | - | - | - |
| After 3 hours | 87 | 46 | 46 | 46 | 56 | 51 | 53 | 54 |

### Example 2

Resin compositions (9) to (12) were prepared in the following manner, and the rate of the resin compositions to develop adhesive strength was determined by measuring the softening temperature of each resin composition at the time of three hours after the adhesion to canvas sheets.

### (Preparative Example 1)

At a ratio of one mole of γ-aminopropyltrimethoxysilane (trade name: KBM903, manufactured by Shin-Etsu Chemical) to one mole of 2-ethylhexyl acrylate, they were mixed and allowed to react with each other at 50°C for 3 days, to give a product (S-1).

In a reaction container placed were 500 g of polyolefin polyol (trade name: Polytale HA, manufactured by Mitsubishi Chemical Corp.) and 106 g of isophorone diisocyanate (trade name: Desmodule I, manufactured by Sumika Bayer Urethane), with heat to 90°C under nitrogen stream, allowed to react for 6 hours, to give a urethane prepolymer (S-2). To this product, 175 g of the product (S-1) obtained above was added, and the mixture was allowed to react at 80°C for 1 hour, to give a product (S-3).

### (Preparative Example 2)

In a reaction container placed were 500 g of polyolefin polyol (trade name: GI-1000, manufactured by Nippon Soda) and 222 g of isophorone diisocyanate (trade name: Desmodule I, manufactured by Sumika Bayer Urethane), allowed to react at 90°C under nitrogen stream for 6 hours, to give a urethane prepolymer (S-4). To this product, 227 g of N-ethyl-aminoisobutyltrimethoxysilane (trade name: A-link 15, manufactured by Nippon Unicar Co., Ltd.) was added, and the mixture was allowed to react additionally at 80°C for 1 hour, to give a product (S-5)

### (Preparative Example 3)

At a ratio of one mole of N-β-(aminoethyl)-γ-aminopropylmethyldimethoxysilane (trade name: KBM602, manufactured by Shin-Etsu Chemical) to 1 mole of lauryl acrylate to 1 mole of methyl acrylate, they were mixed and allowed to react at 50°C for ten days, to give a product (S-6).

One mole of dimethyl maleate was added to 1 mole of N-β(aminoethyl)-γ-aminopropyltrimethoxysilane (trade name: KBM603, manufactured by Shin-Etsu Chemical) and the mixture was allowed to react at 70°C for 5 hours. Then 1 mole of methyl acrylate was further added and the mixture was allowed to react at 50°C for 10 days, to give a product (S-7).

In a reaction container placed were 500 g of polyolefin polyol (trade name: Polytale HA, manufactured by Mitsubishi Chemical Corp.) and 106 g of isophorone diisocyanate (trade name: Desmodule I, manufactured by Sumika Bayer Urethane), with heat to 90°C under nitrogen stream for 6 hours, to give a prepolymer (S-8). To this urethane prepolymer (S-8), 128 g of the product (S-6) obtained above and 119 g of the product (S-7) were added, and the mixture was heated at 80°C for 1 hour to give a product (S-9).

### <Resin composition (9)>

In a reaction container placed were 135 g of a SBS resin (trade name: Toughpren A, manufactured by Asahi Kasei Corp.), 135 g of a SIS resin (trade name: Quintac 3421, manufactured by Zeon Corporation) and 530 g of an alicyclic saturated hydrocarbon resin (trade name: Alcon M115, manufactured by Arakawa Kasei Co., Ltd.). The mixture was heated to 150°C under reduced pressure, allowing dehydration of the resins for 30 minutes. Then, 200 g of the product (S-3) obtained in Preparative Example (1), 1.0 g of boron trifluoride piperidine complex and 5 g of a phenol-based stabilizer (trade name: Irganox 1010, manufactured by Ciba-Geigy Corp.) were added thereto in nitrogen environment, and the mixture was stirred under heat at 150°C for 30 minutes, to give a resin composition (9).

### <Resin composition (10)>

A resin composition (10) was obtained in the same manner as the resin composition (9), except that the product (S-3) was replaced with the product (S-5) obtained in Preparative Example (2).

### <Resin composition (11)>

A resin composition (11) was obtained in the same manner as the resin composition (9), except that the product (S-2) was replaced with the product (S-9) obtained in Preparative Example (3).

### <Resin composition (12)>

A resin composition (12) was obtained in the same manner as the resin composition (9), except that the boron trifluoride piperidine complex was replaced with 1.0 g of a dibutyltin-based catalyst (trade name: No.918, manufactured by Sankyo Organic Chemicals).

### (Measurement of softening temperature)

A pair of canvas sheets were bonded with each of the resin compositions (9) to (12) kept at 150°C, and the softening temperature after 3 hours was determined under the same condition as that in Example 1. Results are summarized in Table 2.

As shown in Table 2, the resin compositions (9) to (11) prepared by using boron trifluoride piperidine complex as curing catalyst had a resin-composition softening temperature 3 hours after bonding that was around 67°C similarly. In contrast, the resin composition (12) prepared by using dibutyltin catalyst had a distinctively lower softening temperature. That result indicates that the resin composition (12) would be still in the process of hardening even after 3 hours, it is understood therefrom that the hardening efficiency thereof be lower than that of the resin compositions (9) to (11). Here, it is noted that all of the resin compositions (9) to (11) had a softening temperature close to that shown in Table 2, five minutes after bonding.

. The difference in softening temperature between the resin compositions (9) to (11) and the resin composition (12) is about 10°C, and this difference means a great significance from the point of practical heat resistance. For example, in quality monitoring of wrapping adhesives for house-building materials, the quality is evaluated by a creep test at 60°C, and thus, the softening temperature of hardened product, whether it is higher or lower than 60°C, is an unignorable feature for exhibition of the heat-resistant creep strength in the quality-monitoring test. There are currently no curing catalyst that can provide a hardened product with a heat resistance leading to a softening temperature of 60°C or higher in a short curing period of about 3 hours, and thus the boron trifluoride piperidine complex is a catalyst quite useful for accomplishing a fast-curable resin composition giving a hardened product higher in heat resistance.

**(Table 2) Softening temperature after 3 hours**

| Measuring time | Softening temperature (°C) | | | |
|---|---|---|---|---|
| | Resin composition | | | |
| | (9) | (10) | (11) | (12) |
| After 3 hours | 67 | 68 | 66 | 56 |

### Example 3

The following resin composition (13) was prepared, and the press-bonding period needed for giving an adhesive strength enduring a preset tensile force was determined, according to the following operation. And, it was compared with that of the resin composition (1) obtained in Example 1.

### <Resin composition (13)>

In a reaction container placed were 500 g of a silane-modified amorphous-poly-α-olefin resin (containing trimethoxysilyl group, trade name: VESTOPLAST 206, manufactured by Degussa Japan) and 500 g of an alicyclic saturated hydrocarbon resin (trade name: Alcon M115, manufactured by Arakawa Kasei Co., Ltd.), with heat to 150°C, allowing dehydration of the resin for 30 minutes, under reduced pressure. To the resins, 0.5 g of boron trifluoride piperidine complex was added, and the mixture was stirred at a temperature of 150°C for 30 minutes, to give a resin composition (13).

### (Determination of press-bonding period)

The following operation was conducted in an analyzer having a pair of boards facing each other respectively equipped with a pressing device and a drawing device.

Corrugated boards C (kind of paper: K180 liner) as the substrates to be bonded were equipped respectively to the surface of the boards in the analyzer, and left in an environment at 23°C and a relative humidity of 50%.

Each of the resin composition prepared as described above was heated to 180°C, applied in a line shape on one of the substrate to be bonded in the analyzer at a ratio of approximately 3 g/m, and left for 2 seconds. Then the other substrate to be bonded was overlapped thereon, and the substrates were bonded to each other under a load of 8.82 N (approximately 0.9 kgf) by using the pressing device for 10 seconds. A drawing force of 4.90 N (approximately 0.5 kgf) was applied to the bonded substrates in the direction perpendicular to the bonding faces by using the drawing device. If the bonded substrates were peeled within 20 seconds or less, the operation of press-bonding and pulling the substrates was repeated while the press-bonding period was elongated by 5 seconds, until the substrate withstood the tension for 20 seconds, giving the press-bonding period needed for giving an adhesive strength enduring the tension for 20 seconds. Results are summarized in Table 3.

The resin composition (13) is a mixture that an alicyclic saturated hydrocarbon resin was added to the resin composition (1), and shortening of the press-bonding period of resin composition (13) shown in Table 3 indicates that addition of the resin was effective in easy providing a favorable initial adhesive strength.

**(Table 3)**

| | Resin composition | |
|---|---|---|
| | (1) | (13) |
| Press-bonding period | 25 sec. | 15 sec. |

### Example 4

The following resin compositions (14) and (15) were prepared, and the softening temperature thereof after 24 hours was determined in the same manner as Example 1. Results are summarized in Table 4.

### <Resin composition (14)>

In a reaction container placed were 100 g of a SEBS resin (trade name: Clayton G1657, manufactured by Shell), 500 g of a silane-modified amorphous-poly-α-olefin resin (containing trimethoxysilyl group, trade name: VESTOPLAST 206, manufactured by Degussa Japan) and 400 g of an alicyclic saturated hydrocarbon resin (trade name: Alcon M115, manufactured by Arakawa Kasei Co., Ltd.), with heat to 150°C under reduced pressure, allowing dehydration of the resins for 30 minutes. Then 5 g of a phenol-base stabilizer (trade name: Irganox 1010, manufactured by Ciba-Geigy Corp.) and 1.0 g of boron trifluoride monoethylamine complex were added thereto in nitrogen atmosphere, and the mixture was stirred at 150°C for 30 minutes to give a resin composition (14).

### <Resin composition (15)>

A resin composition (15) was prepared in the same manner as the resin composition (14), except that 100 g of a PP wax (trade name: viscose 660P, manufactured by Sanyo Chemical Industries) was added before the heating dehydration.

### (Softening temperature of resin composition)

The results in Table 4 show that addition of the PP wax was effective in raising the softening temperature of the resin composition.

**(Table 4) Softening temperature (°C)**

| Measuring time | Softening temperature (°C) | |
|---|---|---|
| | Resin composition | Resin composition |
| | (14) | (15) |
| After 24 hours | 84 | 98 |

### Example 5

A resin composition (16) was prepared in the same manner as the resin composition (1), except that 0.5 g of boron trifluoride piperidine complex was replaced with 0.3 g of boron trifluoride diethylether complex.

Moreover, a resin composition (17) was prepared in the same manner as the resin composition (1), except that 0.5 g of boron trifluoride piperidine complex was replaced with 0.5 g of methanol solution of boron trifluoride methanol complex (boron trifluoride absolute dry weight: 14 to 15%).

The softening temperature of each of the hardened products of the resin compositions (16) and (17) 3 hours after hardening was determined by the same method as that in Example 1. The results are summarized in Table 5.

As shown in Table 5, boron trifluoride diethylether complex and boron trifluoride methanol complex are both extremely effective as the curing agent for the resin having the silicon-containing functional group, and allow production of a hardened product that is higher in softening temperature and shorter in curing period.

**(Table 5) Softening temperature (°C)**

| Measuring time | Softening temperature (°C) | |
|---|---|---|
| | Resin composition | Resin composition |
| | (16) | (17) |
| After 3 hours | 79 | 81 |

### Example 6

The following resin compositions (18) to (21) were prepared, and the peeling strength of the composite when polyethylene and canvas sheets are bonded with each of the resin compositions was determined in the following manner.

### <Resin composition (18)>

In a reaction container placed were 100 g of a SEBS resin (trade name: Clayton G1657, manufactured by Shell), 500 g of a silane-modified amorphous-poly-α-olefin resin (containing trimethoxysilyl group, trade name: VESTOPLAST 206, manufactured by Degussa Japan), 400 g of a partially hydrogenated petroleum resin (trade name: Imarv S-100, manufactured by Idemitsu Kosan) and 100 g of a PP (polypropylene) wax (trade name: Viscose 660P, manufactured by Sanyo Chemical Industries), with heat to 150°C under reduced pressure, allowing dehydration of the resin for 30 minutes. Then 5 g of a phenol-based stabilizer (trade name: Irganox 1010, manufactured by Ciba-Geigy Corp.) and 1.0 g of boron trifluoride piperidine complex were added thereto in nitrogen atmosphere, and the mixture was stirred at 150°C for 30 minutes to give a resin composition (18).

### <Resin composition (19)>

A resin composition (19) was prepared in the same manner as the resin composition (18), except that the PP wax was replaced with 100 g of a PE (polyethylene) wax (trade name: Mitusi HiWax 210P, manufactured by Mitsui Chemicals).

### <Resin composition (20)>

A resin composition (20) was prepared in the same manner as the resin composition (18), except that the PP wax was replaced with 200 g of a PE wax (trade name: Mitsui HiWax 210P, manufactured by Mitsui Chemicals).

### <Resin composition (21)>

A resin composition (21) was prepared in the same manner as the resin composition (18), except that 100 g of the PE wax (trade name: Mitsui HiWax 210 P, manufactured by Mitsui Chemicals) was further added before the heating dehydration.

### (Measurement of peeling strength)

With one g of each curable resin composition, one entire face of a polyethylene flat plate (thickness: 3 mm, width: 25 mm, length: 100 mm) was coated uniformly; and a canvas sheet (width: 25 mm, length: 200 mm) was bonded immediately to the bonding area of 25 mm in width and 80 mm in length, to give a test sample. Each test sample was left at a temperature of 23°C and a relative humidity of 50±5% for 7 days, and the 180-degree peeling strength (N/25 mm) thereof was measured according to JIS K6854. Results are summarized in Table 6.

As apparent from Table 6, addition of a polyethylene wax to the resin composition was evidently effective in improving the peeling strength when a polyethylene substrate was bonded.

**(Table 6)**

| | Resin composition | | | |
|---|---|---|---|---|
| | (18) | (19) | (20) | (21) |
| Peeling strength | 35 | 122 | 107 | 97 |
| (N/25mm at 23°C) | | | | |

### Example 7

### <Resin composition (22)>

A resin composition (22) was prepared in the same manner as the resin composition (15) in Example 4, except that 100 g of a silyl group-containing acrylic reactive diluent (trade name: XPR-22, manufactured by Toagosei) was added before the heating dehydration.

### <Resin composition (23)>

A resin composition (23) was prepared in the same manner as the resin composition (15) in Example 4, except that 100 g of process oil (trade name: Shelflex 371, manufactured by Japan Chemtech) was added before the heating dehydration.

### (Measurement of softening temperature)

Canvas sheets are bonded with each of the resin compositions (15), (22) and (23) prepared at 150°C, and the softening temperature of the resin composition was determined by the same method as that in Example 1, except that the period for leaving the sheets to stand after the bonding was changed to 24 hours. The results are summarized in Table 7.

### (Measurement of open time)

Each of the resin compositions (15), (22) and (23) was bead-applied (diameter: approximately 3 mm) onto a liner paper as it was heated to 180°C in an atmosphere of a temperature of 23°C and a relative humidity of 50% (±10%); it was left to stand for 5 seconds; the other liner paper was then bonded thereto and they were pressed to each other under a load of 1 kg for 5 seconds; they were aged for one day; and the bonded liner papers were peeled from each other, to confirm whether the liner paper was broken or not. If the liner paper was broken, the above operation of bonding the liner papers and peeling the bonded papers was repeated while the standing period was elongated by 5 seconds, until the liner papers after bonding were peeled off without breakage, and the maximum value of the standing period when the liner paper was broken was designated as the open time. Results are summarized in Table 7.

The hot-melt adhesive is different from common adhesives in that it possibly gives favorable adhesion when the adherends are united after a standing period being shorter than the open time. Accordingly, as described above, the maximum value of the standing period giving favorable adhesion is the open time of the hot-melt adhesive.

According to Table 7, it is understood from comparison of the resin compositions (15) and (22) that addition of a reactive diluent leads to extension of the open time without lowering of the softening point of the resin composition. In contrast, the resin composition (23) employing a diluent containing no reactive group had a significantly lower softening temperature and no heat resistance.

**(Table 7)**

| | Resin composition | | |
|---|---|---|---|
| | (15) | (22) | (23) |
| Softening temperature | | | |
| ,(24 hours) | 98°C | 94°C | 66°C |
| Open time | 55 sec. | 110 sec.120 | sec. |

### Industrial applicability

The present invention provides a reactive hot-melt adhesive superior in hardening efficiency to conventional adhesives that was prepared by taking advantages in heat resistance, light stability, electrical insulating properties of a resin having a silicon-containing functional group, and it is particularly useful in the fields of adhesive, sealing material, coating material and the like.

## Claims

1. A reactive hot-melt resin composition,
**characterized by** comprising: a curable resin having a
hydrolysable silyl group in the molecule; and at least one boron compound selected from the group consisting of boron halides and boron halide complexes.

2. The reactive hot-melt resin composition as set forth in claim 1, wherein the boron compound is contained in an amount of 0.001 to 5 parts by mass with respect to 100 parts by mass of the curable resin.

3. The reactive hot-melt resin composition as set forth in claim 1 or 2, further comprising a tackifier resin which is compatible with the curable resin.

4. The reactive hot-melt resin composition as set forth in claim 3, wherein the tackifier resin is contained in an amount of 5 to 1,000 parts by mass with respect to 100 parts by mass of the curable resin.

5. The reactive hot-melt resin composition as set forth in any one of claims 1 to 4, further comprising a thermoplastic resin which is compatible with the curable resin.

6. The reactive hot-melt resin composition as set forth in claim 5, wherein the thermoplastic resin is contained in an amount of 5 to 1,000 parts by mass with respect to 100 parts by mass of the curable resin.

7. The reactive hot-melt resin composition as set forth in any one of claims 1 to 6, further comprising a reactive diluent being liquid at room temperature, the reactive diluent having a hydrolysable silyl group and being compatible with the curable resin.

8. The reactive hot-melt resin composition as set forth in claim 7, wherein the reactive diluent is contained in an amount of 3 to 30 parts by mass with respect to 100 parts by mass of the curable resin.

9. The reactive hot-melt resin composition as set forth in any one of claims 5 to 8, wherein the thermoplastic resin includes a polyethylene wax.

10. The reactive hot-melt resin composition as set forth in any one of claims 1 to 9, wherein the boron halide complexes include a complex of a compound selected from the group consisting of amine compounds, alcohol compounds and ether compounds with one of the boron halides, and the boron halides includes boron trifluoride, boron trichloride, boron tribromide and boron triiodide.

11. The reactive hot-melt resin composition as set forth in any one of claims 1 to 10, wherein the boron compound comprises boron trifluoride or a boron trifluoride complex.

12. The reactive hot-melt resin composition as set forth in any one of claims 1 to 11, wherein the hydrolysable silyl group comprises a silicon-containing functional group represented by Formula: -SiR¹X¹X² or Formula: SiX¹X²X³ (wherein, X¹, X² and X³ independently represent, respectively, a hydrolysable group selected from the group consisting of halogen groups, a hydride group, alkoxyl groups, acyloxyl groups, ketoximate groups, amino groups, amido groups, aminooxyl groups, a mercapto group and alkenyloxyl groups; and R¹ represents a substituted or unsubstituted organic group having 1 to 6 carbon atoms).

13. A reactive hot-melt adhesive, comprising the hot-melt resin composition as set forth in any one of claims 1 to 12.

## Patentansprüche

1. Reaktive Schmelz-Harz-Zusammensetzung, **dadurch gekennzeichnet dass** sie umfasst: ein härtbares Harz mit einer hydrolysierbaren Silylgruppe in dem Molekül; und mindestens eine Borverbindung, ausgewählt aus der Gruppe bestehend aus Borhalogeniden und Borhalogenidkomplexen.

2. Reaktive Schmelz-Harz-Zusammensetzung nach Anspruch 1, wobei die Borverbindung in einer Menge von 0,001 bis 5 Gewichtsteilen bezogen auf 100 Gewichtsteile des härtbaren Harzes enthalten ist.

3. Reaktive Schmelz-Harz-Zusammensetzung nach Anspruch 1 oder 2, weiterhin umfassend ein Klebrigmacherharz, welches mit dem härtbaren Harz kompatibel ist.

4. Reaktive Schmelz-Harz-Zusammensetzung nach Anspruch 3, wobei das Klebrigmacherharz in einer Menge von 5 bis 1.000 Gewichtsteilen bezogen auf 100 Gewichtsteile des härtbaren Harzes enthalten ist.

5. Reaktive Schmelz-Harz-Zusammensetzung nach einem der Ansprüche 1 bis 4, weiterhin umfassend ein thermoplastisches Harz, welches mit dem härtbaren Harz kompatibel ist.

6. Reaktive Schmelz-Harz-Zusammensetzung nach Anspruch 5, wobei das thermoplastische Harz in einer Menge von 5 bis 1.000 Gewichtsteilen bezogen auf 100 Gewichtsteile des härtbaren Harzes enthalten ist.

7. Reaktive Schmelz-Harz-Zusammensetzung nach einem der Ansprüche 1 bis 6, weiterhin umfassend ein reaktives Streckmittel, das bei Raumtemperatur flüssig ist, wobei das reaktive Streckmittel eine hydrolysierbare Silylgruppe besitzt und kompatibel mit dem härtbaren Harz ist.

8. Reaktive Schmelz-Harz-Zusammensetzung nach Anspruch 7, wobei das reaktive Streckmittel in einer Menge von 3 bis 30 Gewichtsteilen bezogen auf 100 Gewichtsteile des härtbaren Harzes enthalten ist.

9. Reaktive Schmelz-Harz-Zusammensetzung nach einem der Ansprüche 5 bis 8, wobei das thermoplastische Harz ein Polyethylenwachs einschließt.

10. Reaktive Schmelz-Harz-Zusammensetzung nach einem der Ansprüche 1 bis 9, wobei der Borhalogenidkomplex einen Komplex von einer Verbindung, ausgewählt aus der Gruppe bestehend aus Aminverbindungen, Alkoholverbindungen und Etherverbindungen, mit einem der Borhalogenide einschließt, und die Borhalogenide Bortrifluorid, Bortrichlorid, Bortribromid und Bortriiod einschließen.

11. Reaktive Schmelz-Harz-Zusammensetzung nach einem der Ansprüche 1 bis 10, wobei die Borverbindung Bortrifluorid oder einen Bortrifluoridkomplex umfasst.

12. Reaktive Schmelz-Harz-Zusammensetzung nach einem der Ansprüche 1 bis 11, wobei die hydrolysierbare Silylgruppe eine siliciumhaltige funktionale Gruppe dargestellt durch die Formel: -SiR¹X¹X² oder Formel: -SiX¹X²X³ (wobei X¹, X² und X³ unabhängig eine hydrolysierbare Gruppe, ausgewählt aus der Gruppe bestehend aus Halogengruppen, einer Hydridgruppe, Alkoxylgruppen, Acyloxylgruppen, Ketoximatgruppen, Aminogruppen, Amidogruppen, Aminooxylgruppen, einer Mercaptogruppe und Alkenyloxylgruppen, darstellen; und R¹ stellt eine substituierte oder unsubstituierte organische Gruppe mit 1 bis 6 Kohlenstoffatomen dar) umfasst.

13. Reaktiver Schmelzhaftkleber, umfassend die reaktive Schmelz-Harz-Zusammensetzung nach einem der Ansprüche 1 bis 12.

## Revendications

1. Composition de résine thermofusible réactive, **caractérisée en ce qu'**elle comprend : une résine durcissable ayant un groupe silyle hydrolysable dans la molécule ; et au moins un composé du bore choisi dans l'ensemble constitué par les halogénures de bore et les complexes d'halogénure de bore.

2. Composition de résine thermofusible réactive selon la revendication 1, dans laquelle le composé du bore est présent en une quantité de 0,001 à 5 parties en masse pour 100 parties en masse de la résine durcissable.

3. Composition de résine thermofusible réactive selon la revendication 1 ou 2, comprenant en outre une résine conférant un effet poisseux qui est compatible avec la résine durcissable.

4. Composition de résine thermofusible réactive selon la revendication 3, dans laquelle la résine conférant un effet poisseux est présente en une quantité de 5 à 1000 parties en masse pour 100 parties en masse de la résine durcissable.

5. Composition de résine thermofusible réactive selon l'une quelconque des revendications 1 à 4, comprenant en outre une résine thermoplastique qui est compatible avec la résine durcissable.

6. Composition de résine thermofusible réactive selon la revendication 5, dans laquelle la résine thermoplastique est présente en une quantité de 5 à 1000 parties en masse pour 100 parties en masse de la résine durcissable.

7. Composition de résine thermofusible réactive selon l'une quelconque des revendications 1 à 6, comprenant en outre un diluant réactif qui est liquide à température ambiante, le diluant réactif ayant un groupe silyle hydrolysable et étant compatible avec la résine durcissable.

8. Composition de résine thermofusible réactive selon la revendication 7, dans laquelle le diluant réactif est présent en une quantité de 3 à 30 parties en masse pour 100 parties en masse de la résine durcissable.

9. Composition de résine thermofusible réactive selon l'une quelconque des revendications 5 à 8, dans laquelle la résine thermoplastique comprend une cire de polyéthylène.

10. Composition de résine thermofusible réactive selon l'une quelconque des revendications 1 à 9, dans laquelle les complexes d'halogénure de bore comprennent un complexe d'un composé choisi dans l'ensemble constitué par les composés amines, les composés alcools et les composés éthers avec l'un des halogénures de bore, et les halogénures de bore comprennent le trifluorure de bore, le trichlorure de bore, le tribromure de bore et le triiodure de bore.

11. Composition de résine thermofusible réactive selon l'une quelconque des revendications 1 à 10, dans laquelle le composé du bore comprend du trifluorure de bore ou un complexe de trifluorure de bore.

12. Composition de résine thermofusible réactive selon l'une quelconque des revendications 1 à 11, dans laquelle le groupe silyle hydrolysable comprend un groupe fonctionnel siliconé représenté par la formule -SiR¹X¹X² ou la formule -SiX¹X²X³ (où X¹, x² et X³ représentent indépendamment, respectivement, un groupe hydrolysable choisi dans l'ensemble constitué par les groupes halogéno, un groupe hydrure, les groupes alcoxy, les groupes acyloxy, les groupes cétoximate, les groupes amino, les groupes amido, les groupes aminoxy, un groupe mercapto et les groupes alcényloxy ; et R¹ représente un groupe organique substitué ou non substitué ayant de 1 à 6 atomes de carbone).

13. Adhésif thermofusible réactif comprenant la composition de résine thermofusible de l'une quelconque des revendications 1 à 12.
